# EUROPEAN PATENT APPLICATION

(11) **EP 4 693 845 A1**
(43) Date of publication of application: **11.02.2026**
(21) Application number: 24779224.5
(22) Date of filing: 06.03.2024
(51) Int. Cl.: H02K 15/06

(54) **DEVICE FOR MANUFACTURING ARMATURE**

(30) Priority: 24.03.2023 JP 2023049070
(71) Applicant: NHK Spring Co., Ltd., Kanagawa 236-0004 (JP)
(72) Inventor: UEDA, Ryosuke, Yokohama-shi, Kanagawa 236-0004 (JP); SHIMADA, Satoru, Yokohama-shi, Kanagawa 236-0004 (JP); MURAYAMA, Masakazu, Himeji-shi, Hyogo 679-2122 (JP)
(74) Representative: DREISS Patentanwälte PartG mbB
(86) International application number: PCT/JP2024/008590
(87) International publication number: WO 2024/203089

(57) **Abstract**

To improve efficiency of armature manufacture.

An assembly jig (40), which is a segment coil jig configured to stacking plural segment coils (20) into a multilayer form and aligning them into a circular ring shape includes an upper section (42) formed with plural jig slots (44) for inserting the plural segment coils (20) into, and a lower section (48) that is abutted by leg tips of the plural segment coils (20) inserted into the plural jig slots (44). The lower section (48) includes a widening prevention part (52) and a closing prevention part (54) preventing the leg tips of the plural segment coils (20) from widening or closing from a radial direction outer side and a radial direction inner side thereof.

## Description

### Technical Field

The present disclosure relates to a device for manufacturing an armature.

### Background Art

Japanese Patent Application Laid-Open (JP-A) No. 2020-182339 discloses an alignment device that aligns plural segment coils in a circular ring shape for each layer to form aligned coils. The aligned coils of each layer are gripped in a chuck jig and taken out from the alignment device, combined (assembled) with aligned coils from other layers, and inserted into slots of a stator core.

Japanese Patent No. 3975891 discloses a segment coil circular ring alignment device that all at once aligns plural segment coils into a multilayer form by sequentially taking out jigs into which segment coils have been inserted by a segment coil insertion section stored with multiple segment coils from the radial direction inner side.

### SUMMARY OF INVENTION

### Technical Problem

In related art such as that described above, in situations such as, for example, when aligned coils of each layer are being assembled, and when the plural segment coils aligned in a multilayer form are being inserted into slots of a core, such assembly and insertion becomes complicated when positional accuracy between segment coils is low. This results in defective products and the like being generated, and makes the armature production efficiency worse.

In consideration of the above circumstances, an object of the present disclosure is to obtain an armature manufacturing device that is capable of improving armature production efficiency.

### Solution to Problem

An armature manufacturing device according to the present disclosure is a manufacturing device for manufacturing an armature including a core formed with plural slots and plural segment coils that have both leg sections inserted in respective slots of the core and that are stacked in a radial direction of the core in a multilayer form and aligned in a circular ring shape. The armature manufacturing device includes a segment coil jig that is configured to stacking the plural segment coils into a multilayer form and assemble the plural segment coils into a circular ring shape, the segment coil jig including: an upper section formed with plural jig slots for inserting the plural segment coils into, and a lower section that is abutted by leg tips of the plural segment coils inserted into the plural jig slots and that also includes a radial direction engagement section that contacts, or faces in close proximity, the leg tips of the plural segment coils from at least one out of a radial direction outer side or a radial direction inner side.

An armature manufacturing device according to the present disclosure is a manufacturing device for manufacturing an armature including a core formed with plural slots and plural segment coils that have both leg sections inserted in respective slots of the core and that are stacked in a radial direction of the core in a multilayer form and aligned in a circular ring shape. The armature manufacturing device includes a segment coil chuck that is configured to gripping the plural segment coils, which have been aligned or assembled in a circular ring shape, and that includes: an inner peripheral side chuck configured to contact the plural segment coils from an inner peripheral side, and an outer peripheral side chuck that is configured to contact the plural segment coils from an outer peripheral side and that also includes protrusions configured to be inserted between leg sections of the plural segment coils.

Moreover, an armature manufacturing device according to the present disclosure is a manufacturing device for manufacturing an armature including a core formed with plural slots and plural segment coils that have both leg sections inserted in respective slots of the core and that are stacked in a radial direction of the core in a multilayer form and aligned in a circular ring shape. The armature manufacturing device includes a segment coil chuck that is configured to gripping the plural segment coils, which have been aligned or assembled in a circular ring shape, and that includes: an outer peripheral side chuck configured to contact the plural segment coils from an outer peripheral side, and an inner peripheral side chuck that is configured to contact the plural segment coils from an inner peripheral side and that also includes a variable mechanism for varying an outer diameter.

### Advantageous Effects

In the armature manufacturing device according to the present disclosure, the leg tips of the plural segment coils that have been inserted into the plural jig slots of the upper section abut the lower section. The lower section includes the radial direction engagement section that engages with the leg tips of the plural segment coils from at least one out of the radial direction outer side or the radial direction inner side. This thereby raises the positional accuracy between segment coils, making assembly of the plural segment coils and gripping of the plural segment coils with a chuck easier. As a result thereof the production efficiency can be improved.

In the armature manufacturing device according to the present disclosure, the inner peripheral side chuck contacts the plural segment coils aligned in a circular ring shape from the inner peripheral side, and the outer peripheral side chuck contacts from the outer peripheral side. The outer peripheral side chuck includes the protrusions configured to be inserted between the leg sections of the plural segment coils. The circumferential direction positional accuracy between segment coils is thereby raised, making assembly of the plural segment coils and insertion into the slots easier. As a result thereof the production efficiency can be improved.

Moreover, in the armature manufacturing device according to the present disclosure, the inner peripheral side chuck contacts the plural segment coils aligned in the circular ring shape from the inner peripheral side, and the outer peripheral side chuck contacts from the outer peripheral side. The inner peripheral side chuck includes the variable mechanism for varying the outer diameter. The segment coils of each layer having different inner diameter can accordingly be gripped with a single chuck without changeover. As a result thereof the production efficiency can be improved.

### BRIEF DESCRIPTION OF DRAWINGS

Fig. 1 is a perspective view illustrating a stator manufactured by an armature manufacturing method according to an exemplary embodiment.
Fig. 2 is a face-on view of a segment coil for provision in a stator.
Fig. 3 is an explanatory diagram to explain an armature manufacturing method according to an exemplary embodiment.
Fig. 4 is a cross-section illustrating an assembly jig that is a jig configured to segment coils according to an exemplary embodiment.
Fig. 5 is a plan view illustrating an upper section of an assembly jig.
Fig. 6 is a cross-section corresponding to line F6-F6 of Fig. 5.
Fig. 7A is a first cross-section to explain a condition when a segment coil is being removed from an alignment jig by a gripping chuck, which is a segment coil chuck according to an exemplary embodiment.
Fig. 7B is a second cross-section to explain a condition when a segment coil is being removed from an alignment jig by a gripping chuck.
Fig. 7C is a third cross-section to explain a condition when a segment coil is being removed from an alignment jig by a gripping chuck.
Fig. 8 is a cross-section illustrating a first comparative example.
Fig. 9A is a first cross-section to explain a re-grasping process in an armature manufacturing method according to an exemplary embodiment.
Fig. 9B is a second cross-section to explain a re-grasping process.
Fig. 9C is a third cross-section to explain a re-grasping process.
Fig. 10A is a first cross-section to explain a situation when segment coils are inserted into an assembly jig.
Fig. 10B is a second cross-section to explain a situation when segment coils are inserted into an assembly jig.
Fig. 11 is a cross-section illustrating a second comparative example.
Fig. 12 is a cross-section illustrating part of an outer peripheral side chuck provided to a gripping chuck.
Fig. 13 is a cross-section illustrating a third comparative example.
Fig. 14 is a cross-section from the side illustrating part of an inner peripheral side chuck provided to a gripping chuck.
Fig. 15 is a cross-section from the side corresponding to Fig. 14 and illustrating an expanded diameter state of an inner peripheral side chuck.

### DESCRIPTION OF EMBODIMENTS

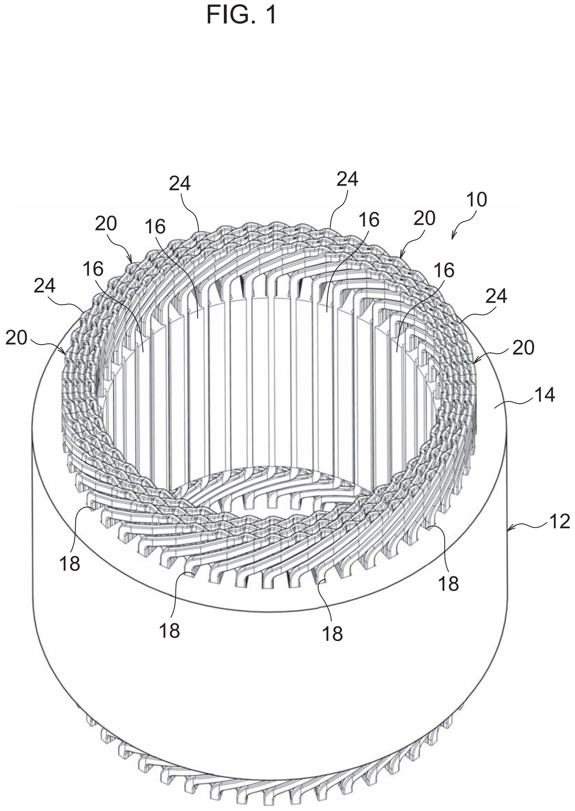

Description follows regarding an exemplary embodiment of the present disclosure, with reference to Fig. 1 to Fig. 15. Note that sometimes some of the reference numerals are omitted in the figures in order to facilitate reading of the drawings. Fig. 1 is a perspective view of a stator 10 manufactured by an armature manufacturing method according to the present exemplary embodiment. The stator 10 includes a stator core 12, and multiple segment coils 20. The stator 10 configures, for example together with a non-illustrated rotor, a three-phase alternating current rotary electrical machine.

The stator core 12 is formed in a circular cylindrical shape from multiple sheets of magnetic steel that are stacked. The stator core 12 includes a yoke 14, multiple teeth 16, and multiple slots 18. The multiple teeth 16 and the multiple slots 18 are formed alternately in a row along a circumferential direction at an inner peripheral side of the stator core 12. The multiple slots 18 are open at both sides in an axial direction, and at the inside in a radial direction.

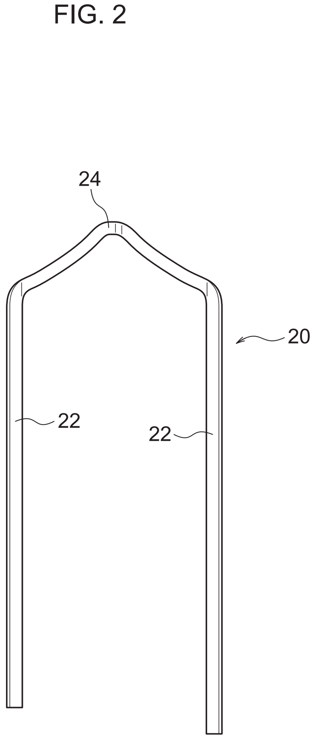

As illustrated in Fig. 2, the segment coils 20 are each, as an example, formed in a substantially U-shape from flat wire having a rectangular cross-section made from copper or the like. The segment coils 20 each include a pair of leg sections 22 that extend substantially parallel to each other, and a coil end section 24 that connects one-end portions of the pair of leg sections 22 together. The segment coils 20 are covered by an insulation cover except for at leading end portions (leg tips) of the pair of leg sections 22.

The pair of leg sections 22 are inserted from an axial direction one side into different slots 18 separated from each other in the circumferential direction of the stator core 12. A non-illustrated insulation member (in this case an insulation paper) is interposed between each of the leg sections 22 and the stator core 12. The coil end section 24 is disposed at the exterior of the slots 18 on the axial direction one side of the stator core 12, and connects base end portions of the pair of leg sections 22 together in the circumferential direction. The multiple segment coils 20 are stacked in plural layers (3 layers in this case) in the radial direction of the stator core 12 and are aligned with each other in a circular ring shape. The leading end portions of the leg sections 22 of the segment coil 20 project out from an end face of the stator core 12 at the axial direction other side, are subjected to twist processing, and are joined to leading end portions of the leg sections 22 of another segment coil 20.

In the manufacturing method and manufacturing device described later, the multiple segment coils 20 are inserted into slots of the stator core all at once in a state in which the plural layers have been assembled together. In the present exemplary embodiment 3 layers of the segment coils 20 are formed.

Note that although in the present exemplary embodiment the segment coils 20 are configured from a flat metal wire having a rectangular cross-section made from metal, there is no limitation thereto, and the segment coils may be configured from a flat wire having a rectangular cross-section made from plural strands. Moreover, although in the present exemplary embodiment, the leading end portions of the leg sections 22 of the segment coil 20 are joined to the leading end portions of the leg sections 22 of another segment coil 20, there is no limitation thereto, and the segment coil 20 may be joined electrically to another segment coil 20 in the slots 18 of the stator core 12. Moreover, although in the present exemplary embodiment the stator core 12 is configured from stacked steel plates, there is no limitation thereto, and the stator core 12 may be one having at least a portion thereof configured from a dust core.

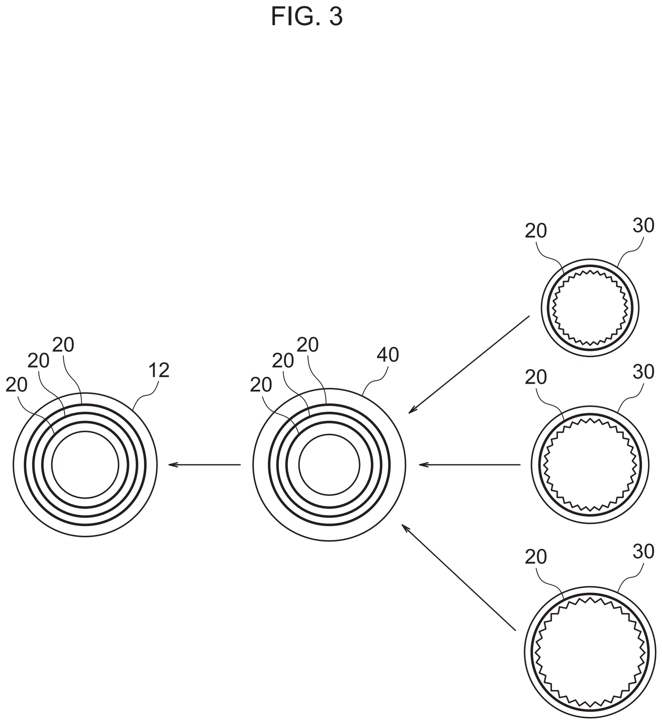

Fig. 3 is an explanatory diagram to explain a manufacturing method of an armature according to the present exemplary embodiment. The armature manufacturing method includes an alignment process, an assembly process, and an insertion process. In the alignment process, plural (3 in this case) alignment jigs 30 each formed with plural alignment slots (omitted in the drawings) are employed to align the plural segment coils 20 in a circular ring shape separately for each of the plural (in this case 3) layers. In the alignment process, the plural segment coils 20 are inserted in sequence into the respective alignment slots while the leg sections 22 are shifted along the alignment slots of the alignment jigs 30 one by one in the circumferential direction, so as to form a single layer by performing one lap thereof.

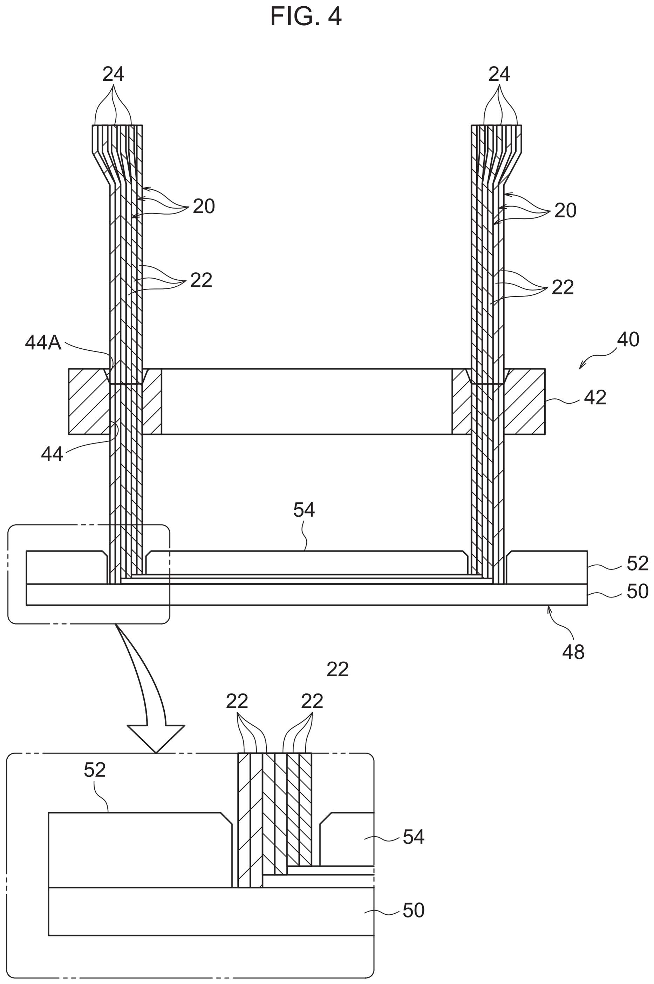

In the assembly process, an assembly jig 40 (see Fig. 4 to Fig. 6), this being a segment coil jig formed with plural assembly slots 44 (jig slots), is employed and the plural segment coils 20 that have been aligned in each of the plural layers as described above are stacked in a multilayer form. In this assembly process, for example, the segment coils 20 of each of the layers are inserted into the assembly slots 44 of the assembly jig 40 in sequence from the outside layer and stacked in a layered form. The plural segment coils 20 are thereby assembled together at a single location, and are in a state that can be inserted into the stator core 12 all at once.

In the insertion process, the plural segment coils 20 that are stacked on each other in a multilayer form as described above are inserted all at once into the plural slots 18 formed in the stator core 12. When doing so, for example, a jig is provided to guide leg tips of the leg sections 22 of the segment coils 20 onto the upper face of the stator core 12. The segment coils 20 are thereby insertable into the stator core 12 in a stable manner. Note that Fig. 3 schematically illustrates the segment coils 20, the alignment jigs 30, the assembly jig 40, and the stator core 12.

Dividing the processes into the alignment process, the assembly process, and the insertion process as described above enables parallel operation, enabling the total machine time for one workpiece to be shortened. In particular in the alignment process, by executing the alignment of the segment coils 20 for each layer in parallel enables the production time to be greatly shortened compared to sequential execution. Furthermore, where there is, for example, an intention to achieve increased efficiency of the production time, parallel operation is enabled by dividing into a gripping chuck for gripping the plural segment coils 20 when transitioning from the alignment process to the assembly process and a gripping chuck for gripping the plural segment coils 20 when transitioning from the assembly process to the insertion process, and this also makes it easier to match the shape of the gripping chuck to circular ring shapes of the segment coils 20 in each of the processes.

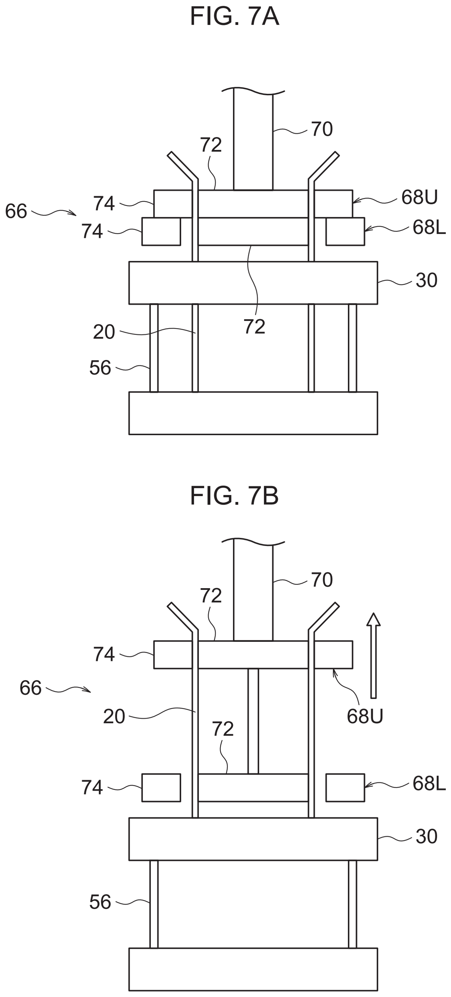

As illustrated in Fig. 4, the assembly jig 40 employed in the assembly process includes an upper section 42 formed in a ring shape, and a lower section 48 formed in a circular plate shape. The upper section 42 and the lower section 48 are arranged coaxially to each other, and are connected together by plural support pillars 56 (see Fig. 7A to Fig. 7C; omitted in Fig. 4).

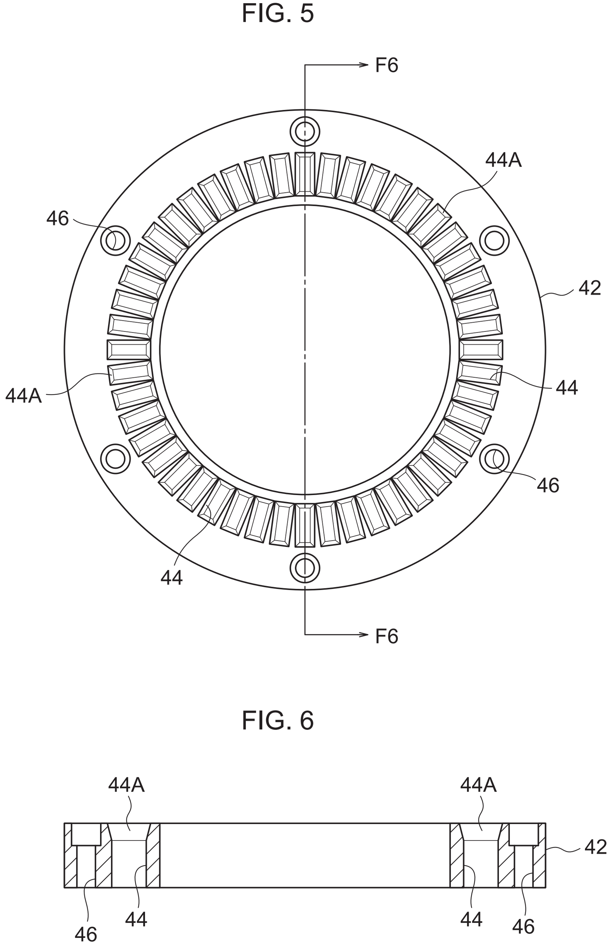

As illustrated in Fig. 5 and Fig. 6, the assembly slots 44, which are plural slots into which the leg sections 22 of the plural segment coils 20 are inserted, are formed in the upper section 42, and lower end portions of the leg sections 22 of the plural segment coils 20 that have been inserted into the plural assembly slots 44 abut the lower section 48. Note that, in Fig. 5 and Fig. 6, 46 indicates fastening holes for fastening and fixing the support pillars 56.

The assembly slots 44 are configured with at least one out of width or length (in this case both) set larger than for the slots 18 formed to the stator core 12. Specifically, the assembly slots 44 have wider openings than the slots 18 in a state in which an insulation paper, which is an insulation member, has been inserted therein, thereby relaxing the leg tip accuracy required when inserting the leg sections 22 of the segment coil 20 into the assembly jig 40.

This thereby means that a task of first assembling in the assembly jig 40 and then inserting is easier than inserting the leg sections 22 of the segment coils 20 directly into the stator core 12. Moreover, this also makes it easier to ensure that the segment coils 20 of layers previously inserted do not get in the way of the segment coils 20 subsequently inserted when the segment coils 20 of each of the layers are being inserted into the assembly jig 40 in sequence from the outside layer.

Moreover, as illustrated in Fig. 5 and Fig. 6, the assembly slots 44 of the assembly jig 40 each include a taper portion 44A having a taper shape tapering outward toward an opening at the upper end thereof. Due to being able to guide the leg sections 22 of the segment coils 20 into the assembly slots 44 using the taper portions 44A, the leg tip accuracy required when inserting the leg sections 22 of the segment coil 20 into the assembly jig 40 can be relaxed even more.

Fig. 7A to Fig. 7C illustrate a gripping chuck 66, which is a segment coil chuck for gripping the plural segment coils 20 that have been aligned in a circular ring shape. The gripping chuck 66 includes, as an example, an upper side gripping section 68U that grips the plural segment coils 20 from the outer peripheral side and the inner peripheral side, and a lower side gripping section 68L that is arranged below the upper side gripping section 68U and grips the plural segment coils 20 from the peripheral inside and peripheral outside, and also includes a relative movement mechanism 70 to move the upper side gripping section 68U and the lower side gripping section 68L relative to each other in the up-down direction. The gripping chuck 66 is, for example, moved by a transport device such as a non-illustrated robot manipulator or the like.

The upper side gripping section 68U and the lower side gripping section 68L include an inner peripheral side chuck 72 that contacts the plural segment coils 20 from the inner peripheral side thereof, and an outer peripheral side chuck 74 that contacts the plural segment coils 20 from the outer peripheral side thereof. The outer peripheral side chuck 74 includes, for example, a drive source such as an air cylinder or the like for pressing the plural segment coils 20 toward the inner peripheral side chuck 72 side. The relative movement mechanism 70 includes a drive source such as an air cylinder or the like for moving the upper side gripping section 68U and the lower side gripping section 68L relative to each other in the up-down direction.

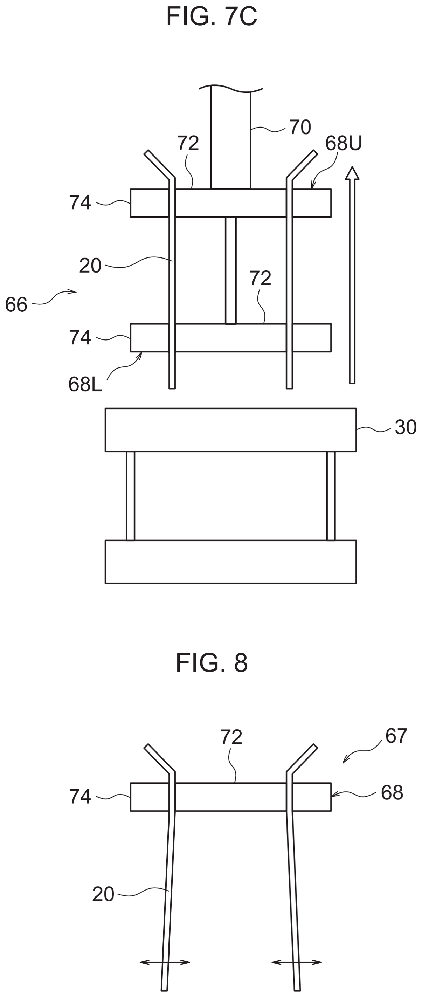

In the gripping chuck 66 configured as described above, for example as illustrated in Fig. 7A, when the plural segment coils 20 are being removed from the alignment jigs 30, upper portions of the plural segment coils 20 are gripped by the upper side gripping section 68U in a state in which the upper side gripping section 68U is in close proximity to the lower side gripping section 68L. Next, as illustrated in Fig. 7B, the upper side gripping section 68U is raised with respect to the lower side gripping section 68L, and lower portions of the plural segment coils 20 are arranged at the height of the lower side gripping section 68L. Next, as illustrated in Fig. 7C, the lower portions of the plural segment coils 20 are gripped by the lower side gripping section 68L, and in this state the gripping chuck 66 is raised as a whole. The plural segment coils 20 are thereby removed from the alignment jigs 30. Note that a similar process is performed when the plural segment coils 20 are being removed from the assembly jig 40.

The plural segment coils 20 that have been removed as described above are gripped at lower portions (leg tips) thereof by the lower side gripping section 68L of the gripping chuck 66, raising the positional accuracy of the leg tips. As a result thereof, the leg sections 22 of the segment coils 20 are easily inserted into the stator core 12, and production efficiency of the stator 10 is improved. Note that although there is no issue with gripping the coil end sides of the segment coils 20 using a single gripping section 68 of a gripping chuck 67 in cases in which the segment coils 20 are not so long, the segment coils 20 have a tendency to tilt over in cases in which the overall segment coil length is particularly long, as in the comparative example illustrated in Fig. 8. In such cases, this results in the position of the leg tips not being restricted, and so the position of the leg tips is no longer stable. As a result thereof, the target for the leg tips on the jig and on the core slots becomes more difficult to hit when assembling or inserting the plural segment coils 20, and workpiece production difficulty becoming high. From this perspective, in the gripping chuck 66 described above, the leg tips of the plural segment coils 20 are gripped by the lower side gripping section 68L, and so the position of the leg tips is stable. This thereby facilitates hitting the target of the leg tips on the slots when assembly and inserting as described above, and simplifies workpiece production, thereby enabling the number of defect products generated to be reduced.

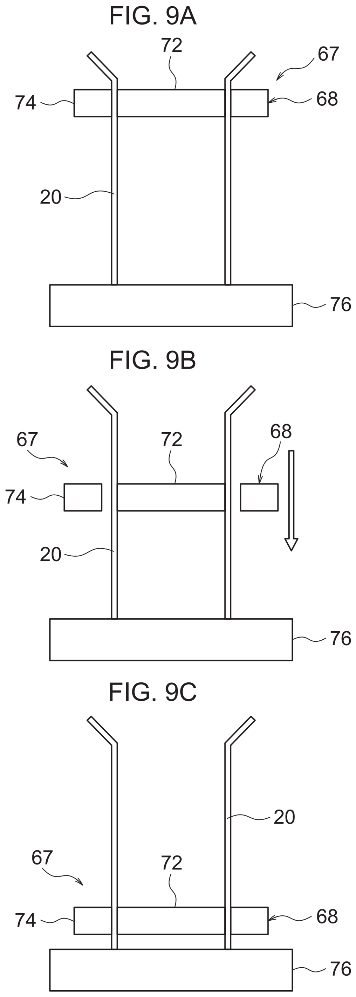

Note that as illustrated in Fig. 9A to Fig. 9C, even in cases in which the overall length of the segment coils 20 is particularly long, and the gripping chuck 67 only includes a single gripping section 68, by executing a re-grasping process the leg tip accuracy can be secured to the same extent as when employing the gripping chuck 66. In such a re-grasping process, after the plural segment coils 20 have been removed from the jig using the gripping chuck 67, as illustrated in Fig. 9A, lower ends (leg tips) of the plural segment coils 20 abut a base 76 of some sort or the other. Next, as illustrated in Fig. 9B, the gripping section 68 is slightly loosened, and the gripping section 68 is displaced toward the leg tip side of the plural segment coils 20. Then as illustrated in Fig. 9C, the plural segment coils 20 are re-gripped again by the gripping section 68. The position of the leg tips of the plural segment coils 20 is thereby stable, with this facilitating hitting the target of the leg tips on the slots when assembly and inserting, and facilitating workpiece production.

Moreover, as illustrated in Fig. 4, the lower section 48 of the assembly jig 40 includes a circular plate shaped base part 50, a widening prevention part 52 fixed to an outer peripheral side of an upper face of the base part 50, and a closing prevention part 54 fixed to a center side of the upper face of the base part 50. The closing prevention part 54 and the widening prevention part 52 correspond to a "radial direction engagement section". The widening prevention part 52 engages with (contacts or faces in close proximity) the leg sections 22 of the segment coils 20 of the outermost layer from the radial direction outer side. The closing prevention part 54 is configured in a stepped circular column shape, and engages with (contacts or faces in close proximity) the leg sections 22 of the segment coils 20 of each layer from the radial direction inner side.

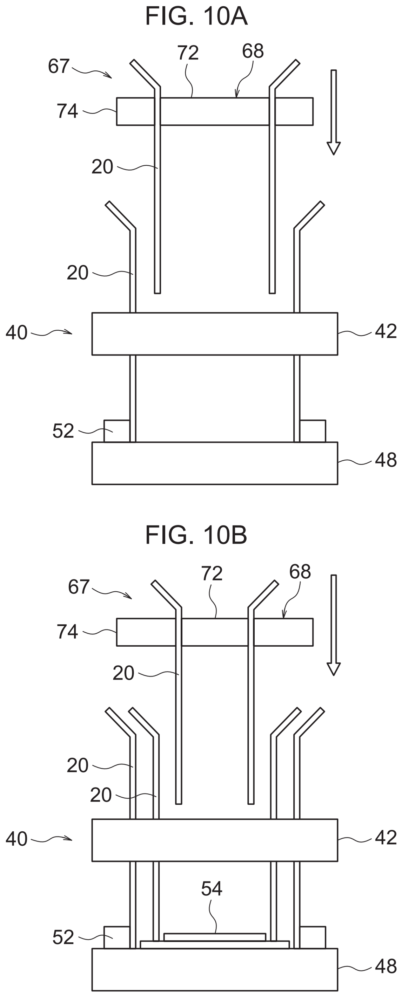

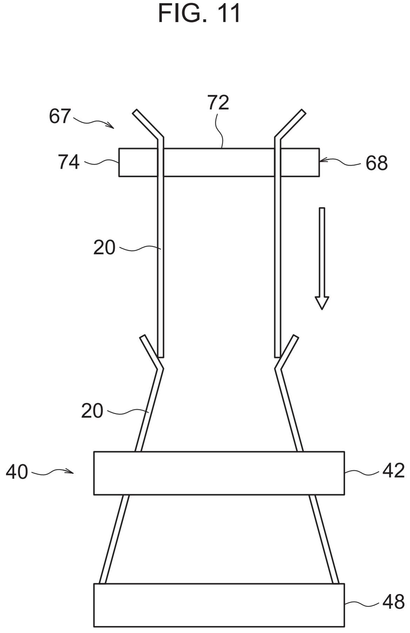

As illustrated in Fig. 10A and Fig. 10B, when the segment coils 20 of each of the layers are being inserted in sequence into the assembly jig 40 from the outside layer, the orientation of the segment coils 20 in each of the layers is stabilized by the widening prevention part 52 and the closing prevention part 54. This accordingly facilitates a task of assembling the segment coils 20 of each of the layers in the assembly jig 40. Namely, in cases in which segment coils 20 have a tendency to tilt due to the overall length of the segment coils 20 being particularly long, for example such as in the comparative example illustrated in Fig. 11, insertion of the segment coils 20 of an inside layer into the assembly jig 40 becomes difficult unless the orientation of the segment coils 20 of a layer outside thereof is stabilized, and this issue can be avoided. Moreover, the leg tip accuracy of the leg sections 22 is also higher when the segment coils 20 that are stacked in plural layers using the assembly jig 40 are being inserted all at once into the stator core 12, thereby facilitating an insertion task.

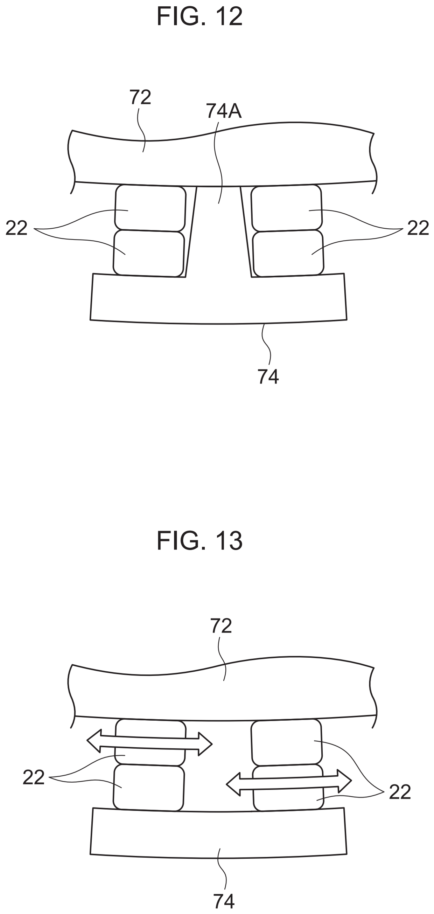

As illustrated in Fig. 12, the outer peripheral side chuck 74 of the gripping chucks 66, 67 includes protrusions 74A to be inserted between the leg sections 22 of the plural segment coils 20. This accordingly enables displacement of the plural segment coils 20 in the circumferential direction (see Fig. 13) to be either prevented or suppressed, raising the circumferential direction positional accuracy between segment coils 20, and thereby improving the leg tip accuracy. As a result, insertion of the plural segment coils 20 into the slots is facilitated, improving the production efficiency of the stator 10.

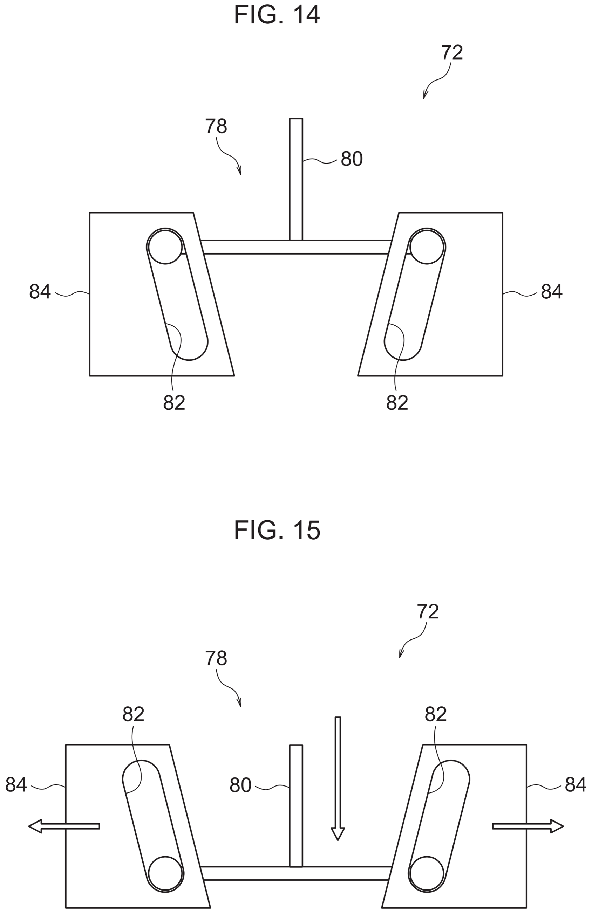

Moreover, as illustrated in Fig. 14 and Fig. 15, the inner peripheral side chuck 72 of the gripping chucks 66, 67 includes a variable mechanism 78 for varying the outer diameter. In the variable mechanism 78, a central bar 80 is moved in the up-down direction by a non-illustrated drive source, and a pair of moving parts 84 having inclined grooves 82 into which end portions of the bar 80 have been inserted are moved in the radial direction. For example, by employing a drive source capable of numerically controlling a position of a ROBO cylinder or the like, the inner peripheral side chuck 72 can be fixed at a freely selected diameter. The segment coils 20 of each layer that have been aligned in states of different inner diameters are accordingly able to be gripped with a single chuck without changeover. As a result thereof, the production efficiency of the stator 10 can be raised.

Note that plural gripping chucks that have different outer diameters of the inner peripheral side chuck 72 may be employed to grip the segment coils 20 of each of the layers aligned in states of different inner diameter. In such cases the variable mechanism 78 described above is not required.

Moreover, although in the exemplary embodiment described above a case has been described in which a stator is manufactured, the present disclosure is also applicable to manufacturing a rotor.

Various modifications may be implemented within a range not departing from the spirit of the present disclosure. Moreover, obviously the scope of rights of the present disclosure is not limited to the exemplary embodiment described above.

The entire content of the disclosure of Japanese Patent Application No. 2023-049070 filed on March 24, 2024 is incorporated by reference in the present specification. All publications, patent applications and technical standards mentioned in the present specification are incorporated by reference in the present specification to the same extent as if each individual publication, patent application, or technical standard was specifically and individually indicated to be incorporated by reference.

## Claims

1. An armature manufacturing device for manufacturing an armature including a core formed with a plurality of slots and a plurality of segment coils that have both leg sections inserted in respective slots of the core and that are stacked in a radial direction of the core in a multilayer form and aligned in a circular ring shape, the manufacturing device comprising:
a segment coil jig that is configured to stack the plurality of segment coils into a multilayer form and assemble the plurality of segment coils into a circular ring shape, the segment coil jig including:
an upper section formed with a plurality of jig slots for inserting the plurality of segment coils into, and
a lower section that is abutted by leg tips of the plurality of segment coils that have been inserted into the plurality of jig slots, and that includes a radial direction engagement section that contacts, or faces in close proximity, the leg tips of the plurality of segment coils from at least one of a radial direction outer side or a radial direction inner side.

2. An armature manufacturing device for manufacturing an armature including a core formed with a plurality of slots and a plurality of segment coils that have both leg sections inserted in respective slots of the core and that are stacked in a radial direction of the core in a multilayer form and aligned in a circular ring shape, the manufacturing device comprising:
a segment coil chuck that is configured to grip the plurality of segment coils, which have been aligned or assembled in a circular ring shape, and that includes:
an inner peripheral side chuck configured to contact the plurality of segment coils from an inner peripheral side, and
an outer peripheral side chuck that is configured to contact the plurality of segment coils from an outer peripheral side and that includes protrusions configured to be inserted between leg sections of the plurality of segment coils.

3. An armature manufacturing device for manufacturing an armature including a core formed with a plurality of slots and a plurality of segment coils that have both leg sections inserted in respective slots of the core and that are stacked in a radial direction of the core in a multilayer form and aligned in a circular ring shape, the manufacturing device comprising:
a segment coil chuck that is configured to grip the plurality of segment coils, which have been aligned or assembled in a circular ring shape, and that includes:
an outer peripheral side chuck configured to contact the plurality of segment coils from an outer peripheral side, and
an inner peripheral side chuck that is configured to contact the plurality of segment coils from an inner peripheral side and that includes a variable mechanism for varying an outer diameter.
